# EUROPEAN PATENT SPECIFICATION

(11) **EP 3 170 799 B1**
(45) Date of publication and mention of the grant of the patent: **31.03.2021**
(21) Application number: 15821764.6
(22) Date of filing: 09.07.2015
(51) Int. Cl.: C03C 27/06, E06B 3/64, C03C 27/10

(54) **VACUUM MULTI-LAYER GLASS**
MEHRSCHICHTIGES VAKUUMGLAS
VERRE MULTICOUCHE À VIDE

(30) Priority: 18.07.2014 JP 2014147910
(43) Date of publication of application: 24.05.2017
(73) Proprietor: AGC Inc., Tokyo 100-8405 (JP)
(72) Inventor: IKEDA, Yusuke, Tokyo 100-8405 (JP); ITO, Hiroshige, Tokyo 100-8405 (JP); WATANABE, Tomoya, Tokyo 100-8405 (JP)
(74) Representative: Müller-Boré & Partner Patentanwälte PartG mbB
(86) International application number: PCT/JP2015/069796
(87) International publication number: WO 2016/009948

(56) References cited:
- EP-A2- 2 522 641
- WO-A1-01/34932
- WO-A1-2009/078903
- WO-A1-2013/048981
- WO-A1-2013/169504
- WO-A1-2013/169504
- JP-A- H11 278 877
- JP-A- 2003 192 400
- KR-B1- 100 202 332

## Description

### TECHNICAL FIELD

The present invention relates to vacuum insulating glass.

### BACKGROUND ART

So-called "vacuum insulating glass", which is formed by stacking a pair of glass substrates in layers via a gap portion and maintaining the gap portion in a vacuum state, has a good heat insulating effect and is therefore used widely for, for example, window glass for constructions such as buildings and houses.

For example, vacuum insulating glass is produced as follows.

First, a first glass substrate and a second glass substrate are prepared. On a surface of one of the glass substrates, a joining layer is formed along the circumference. Next, an assembly body is formed by stacking the first and second glass substrates such that they face each other via the joining layer.

Next, the assembly body is heated to melt and soften the joining layer, and the first and the second glass substrates are joined together. Thereby, a gap portion is formed between first and the second glass substrates.

A through hole and a glass tube inserted in the through hole are provided on the first glass substrate in advance. Therefore, next, the glass tube provided on the first glass substrate is used to apply a decompression process in the gap portion. After that, vacuum insulating glass is produced by sealing a leading end of the glass tube to seal the through hole.

In the vacuum insulating glass produced as described above, a part of the glass tube inserted in the first glass substrate protrudes substantially vertically to the first glass substrate, and there is a possibility that the part is easily broken by contacting another thing. Thus, a protecting cap for protecting the glass tube is provided around the glass tube (for example, see patent document 1) .

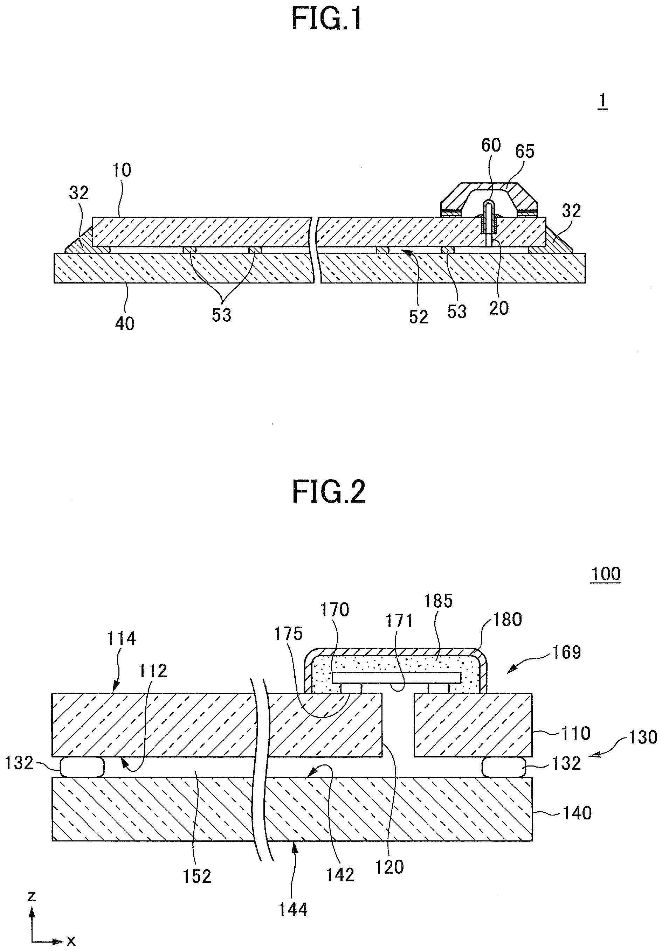

FIG. 1 schematically illustrates a configuration of conventional vacuum insulating glass.

As illustrated in FIG. 1, conventional vacuum insulating glass 1 includes a first glass substrate 10, a second glass substrate 40, and a gap portion 52 arranged between the glass substrates. The gap portion 52 is sealed by a sealing member 32. A plurality of spacers 53 are arranged in the gap portion 52.

A through hole 20 is formed on the first glass substrate 10. A glass tube 60 whose leading end is sealed is inserted in the through hole 20.

Further, in the circumference of the through hole 20 (referred to as the "through hole sealing part"), the vacuum insulating glass 1 includes a protecting cap 65 arranged to cover the glass tube 60. It is possible, by providing the protecting cap 65, to prevent the glass tube 60 from being broken by contacting another thing,

Patent Document 2 addresses the fragility of through holes in vacuum insulating glass. This document describes a vacuum insulating glass having a gap portion between first and second glass substrates wherein the first glass substrate is fitted with a through hole penetrating from the first surface to the second surface of the first glass substrate. The through hole is sealed and a cap is disposed over the outwardly protruding portion of the pump-out tube.

### [Prior Art Document]

### [Patent Document]

[Patent Document 1] Japanese Unexamined Patent Application Publication No. 2001-58852
[Patent Document 2] International Patent Application Publication No. WO 2013/048981 A1

### SUMMARY OF THE INVENTION

### PROBLEMS TO BE SOLVED BY THE INVENTION

However, in a case where such a protecting cap is provided, a large protecting cap is necessary for covering the protruding glass tube. Therefore, the vicinity of the through hole considerably protrudes and there is a problem of degrading a designing property of vacuum insulating glass.

The present invention is made in view of such a background, and the present invention has an object of providing vacuum insulating glass having a structure, which has an improved designing property and is not easily broken by contacting another thing.

### MEANS FOR SOLVING THE PROBLEMS

According to the present invention, vacuum insulating glass having a gap portion between first and second glass substrates is provided,
wherein the first glass substrate has a first surface, which is closer to the gap portion, a second surface at an opposite side of the first surface, and a through hole that penetrates from the first surface to the second surface, the through hole being sealed by a sealing plate comprising metal, ceramic or glass joined to the first glass substrate via a sealing material comprising brazing filler metal, solder or glass frit,
wherein the sealing plate is covered with a metal cover, and
wherein a clearance gap between the metal cover and the sealing plate is filled with resin.

### EFFECTS OF THE INVENTION

According to the present invention, it is possible to provide vacuum insulating glass having a structure, which has an improved designing property and is not easily broken by contacting another thing.

### BRIEF DESCRIPTION OF THE DRAWINGS

FIG. 1 is a cross-sectional view schematically illustrating a configuration of conventional vacuum insulating glass.
FIG. 2 is a cross-sectional view schematically illustrating a configuration of first vacuum insulating glass.
FIG. 3 is a cross-sectional view schematically illustrating a configuration of second vacuum insulating glass.
FIG. 4 is a diagram illustrating a schematic flow of a method of producing vacuum insulating glass according to one embodiment of the present invention.
FIG. 5 is a diagram schematically illustrating one process in the method of producing the vacuum insulating glass according to the embodiment of the present invention.
FIG. 6 is a diagram schematically illustrating one process in the method of producing the vacuum insulating glass according to the embodiment of the present invention.
FIG. 7 is a diagram schematically illustrating one process in the method of producing the vacuum insulating glass according to the embodiment of the present invention.
FIG. 8 is a cross-sectional view schematically illustrating an example (a window glass for a building) of applying vacuum insulating glass according to one embodiment of the present invention.
FIG. 9 is a cross-sectional view schematically illustrating another example (a window glass for a building) of applying vacuum insulating glass according to one embodiment of the present invention.
FIG. 10 is a cross-sectional view schematically illustrating another example (a window glass for a building) of applying vacuum insulating glass according to one embodiment of the present invention.
FIG. 11 is a cross-sectional view schematically illustrating another example (a window glass for a building) of applying vacuum insulating glass according to one embodiment of the present invention.

### EMBODIMENTS FOR CARRYING OUT THE INVENTION

In the following, one embodiment of the present invention will be described.

Vacuum insulating glass according to this embodiment has characteristics in which a sealing plate joined to a first glass substrate via a sealing material is placed at a through hole sealing part and the sealing plate is covered with a metal cover. Further, the vacuum insulating glass has characteristics in which a clearance gap between the metal cover and the sealing plate is filled with resin.

Thus, according to the vacuum insulating glass of this embodiment, it is possible to significantly suppress protrusion of the through hole sealing part in a state of suppressing a risk of the sealing plate being broken by an outside force. Therefore, according to the vacuum insulating glass of this embodiment, it is possible to enhance an appearance in comparison with a conventional one while not easily being broken by contacting another thing.

(Vacuum insulating glass according to one embodiment of the present invention)

In the following, an example of a configuration of vacuum insulating glass (referred to as "first vacuum insulating glass" hereinafter) according to one embodiment of the present invention will be described with reference to FIG. 2.

FIG. 2 illustrates a schematic cross-sectional view of first vacuum insulating glass 100.

As illustrated in FIG. 2, the first vacuum insulating glass 100 includes a first glass substrate 110 and a second glass substrate 140. The first glass substrate 110 has a first surface 112 and a second surface 114. The second glass substrate 140 has a third surface 142 and a fourth surface 144. The first glass substrate 110 has a through hole 120 that penetrates from the first surface 112 to the second surface 114.

A gap portion 152 is formed between (the first surface 112 of) the first glass substrate 110 and (the third surface 142 of) the second glass substrate 140. The gap portion 152 is surrounded by a sealing member 130 and is hermetically sealed by the sealing member 130. One or more spacers (not illustrated) may be arranged in the gap portion 152.

In the example illustrated in FIG 2, the sealing member 130 is constituted with a joining layer 132. For example, the joining layer 132 is constituted with a glass solidified layer.

For example, such a glass solidified layer may be formed by burning a paste containing a glass frit. A burning temperature of the glass solidified layer (further, a melting temperature and/or a softening temperature) can be adjusted by changing an amount and a composition of the glass frit contained in the paste.

However, a configuration of the sealing member 130 is not limited to this. Any sealing structure, which is used for conventional vacuum insulating glass, may be applied to the sealing member 130.

Further, the first vacuum insulating glass 100 includes a sealing plate 170 around the through hole 120, that is, at a through hole sealing part 169. An annularly formed sealing material 175 is arranged on a first surface 171 of the sealing plate 170. The sealing plate 170 is joined to the second surface 114 of the first glass substrate 110 via the sealing material 175. Thereby, the through hole 120 is sealed.

Further, a metal cover 180 is arranged at the through hole sealing part 169 to cover the sealing plate 170. Furthermore, a clearance gap between the metal cover 180 and the sealing plate 170 is filled with resin 185.

According to the first vacuum insulating glass 100 having such a configuration, because the sealing plate 170 is covered with the sealing material 175 and the metal cover 180, it is possible to suppress a risk that the sealing plate 170 is broken by an outside force. Further, according to the first vacuum insulating glass 100, because it is possible to significantly suppress protrusion of the through hole sealing part 169, it is possible to significantly enhance an appearance in comparison with a conventional one.

### (Another vacuum insulating glass according to one embodiment of the present invention)

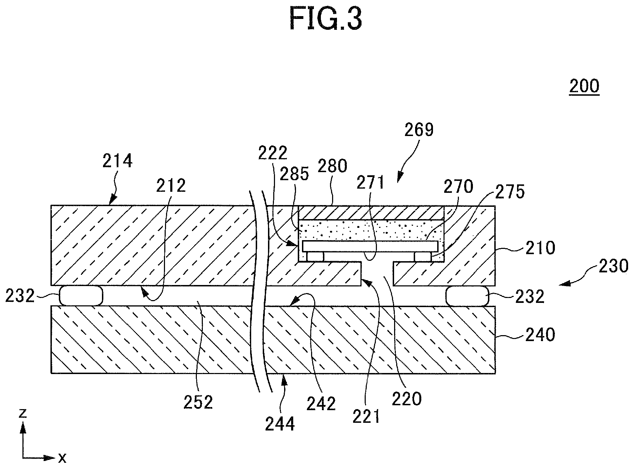

Next, another example of a configuration of vacuum insulating glass (referred to as "second vacuum insulating glass" hereinafter) according to one embodiment of the present invention will be described with reference to FIG. 3.

FIG. 3 illustrates a schematic cross-sectional view of second vacuum insulating glass 200.

As illustrated in FIG. 3, the second vacuum insulating glass 200 basically includes a configuration similar to that of the first vacuum insulating glass 100 illustrated in FIG. 2. Accordingly, in FIG. 3, reference numerals, obtained by adding 100 to the reference numerals illustrated in FIG. 2, are used for members similar to the members illustrated in FIG. 2.

For example, the second vacuum insulating glass 200 includes first and second glass substrates 210 and 240, a gap portion 252, and a sealing member 230 that surrounds the gap portion 252.

However, a configuration of a through hole sealing part 269 of the second vacuum insulating glass 200 is different from that of the first vacuum insulating glass 100.

More specifically, according to the second vaccuum insulating glass 200, in a through hole 220 formed on the first glass substrate 210, a size of a first surface 212 side of the first glass substrate 210 is different from a size of a second surface 214 side. In other words, the through hole 220 has a first part 221 of the first surface 212 side of the first glass substrate 210 and a second part 222 of the second surface 214 side. The second part 222 is larger than the first part 221 in a cross-sectional size in a direction perpendicular to an extending direction of the through hole 220.

Further, a sealing plate 270 is housed in the second part 222. The sealing plate 270 and a sealing material 275, which is annularly placed on the first surface 271 of the sealing plate 270, seal the first part 221 of the through hole 220.

Furthermore, a metal cover 280 is arranged on an upper part of the sealing plate 270 in the second part 222. A clearance gap between the metal cover 280 and the sealing plate 270 is filled with resin 285.

It is apparent for those skilled in the art that effects similar to those of the above described first vacuum insulating glass 100 can be obtained according to the second vacuum insulating glass 200 having the through hole sealing part 269 of such a configuration.

In the example of FIG. 3, an upper surface of the metal cover 280 is configured to be at a level substantially equal to that of the second surface 214 of the first glass substrate 210.

However, this is just an example. The upper surface of the metal cover 280 may protrude from the level of the second surface 214 of the first glass substrate 210, or be at a position lower than the level of the second surface 214 of the first glass substrate 210.

However, in a case where the upper surface of the metal cover 280 is equal to or lower than the level of the second surface 214 of the first glass substrate 210, it is possible to significantly suppress protrusion of the through hole sealing part 269 and to further improve a designing property of the vacuum insulating glass.

### [Constituent Members of Vacuum Insulating Glass]

Next, respective constituent members that constitute vacuum insulating glass according to one embodiment of the present invention will be described. Here, taking the first vacuum insulating glass 100 having a configuration as illustrated in FIG. 2 as an example, the respective constituent members will be described. Accordingly, in the following descriptions, the reference numerals illustrated in FIG. 2 are used to describe the respective members.

### [Glass substrates 110 and 140]

Dimensions and compositions of the glass substrates 110 and 140 are not limited in particular. Any glass substrates that can be used for conventional vacuum insulating glass may be used for the glass substrates 110 and 140.

The first glass substrate 110 and the second glass substrate 140 may have different compositions. Further, various function membranes may be placed on the first glass substrate 110 and/or the second glass substrate 140.

### (Gap portion 152)

One or two or more spacers may be placed in the gap portion 152 as needed. It becomes easy to maintain a height of the gap portion 152 (distance between the first surface 112 of the first glass substrate 110 and the third surface 142 of the second glass substrate 140) in a predetermined value by providing the spacers. However, it is not necessary to place the spacers.

### (Sealing member 130)

A sealing member, which is conventionally used, may be applied to the sealing member 130 arranged around the gap portion 152. For example, the sealing member 130 may be constituted with the joining layer 132 as illustrated in FIG. 2.

In this case, the joining layer 132 may be constituted with a glass solidified layer.

### (Sealing plate 170)

The sealing plate 170 comprises metal, ceramic, glass, or the like.

For example, a thickness of the sealing plate 170 may be in a range of from 0.03 mm to 3 mm. However, the thickness is not limited to this.

### (Sealing material 175)

The sealing material 175 comprises brazing filler metal, solder, or glass frit, having a softening point approximately in a range of from 250 °C to 520 °C. For example, the sealing material 175 may be constituted with a glass solidified layer. In this case, the glass solidified layer may have a composition as illustrated in the following table 1.

**Table 1**

| COMPOSITION | CONTENT (mass%) |
|---|---|
| Bi₂O₃ | 70∼90 |
| ZnO | 5∼15 |
| B₂O₃ | 2∼8 |
| Al₂O₃ | 0.1∼5 |
| SiO₂ | 0.1∼2 |
| CeO₂ | 0.1∼5 |
| Fe₂O₃ | 0.01∼0.2 |
| CuO | 0.01∼5 |

Here, a softening temperature of the glass solidified layer may be approximately in a range from 350 °C to 520 °C. It is preferable, in terms of improving manufacturing efficiency, that the sealing material 175 is a material whose softening temperature is in a range from 400 °C to 520 °C.

### (Metal cover 180)

A material of the metal cover 180 is not limited in particular as long as being constituted with metal. However, in a case of constituting the metal cover 180 with an anticorrosion metal material, resistance to environment is improved.

A thickness of the metal cover 180 is not limited in particular and may be in a range of from 0.03 mm to 3 mm, for example.

### (Resin 185)

The resin 185, which fills up the clearance gap between the metal cover 180 and the sealing plate 170, is not limited in particular. For example, the resin 185 may be an adhesive material.

In a case where the sealing plate 170 is constituted with metal, it is preferable that the resin 185 is constituted with a material having a high moisture permeation resistance. In a case of using the resin 185 having the high moisture permeation resistance, it is possible to restrain the sealing plate 170 from being eroded and degraded by moisture that enters via the metal cover 180.

On the other hand, in a case where the sealing plate 170 is constituted with glass, it is preferable that the resin 185 is constituted with a material having a high modulus of elasticity. When a force is applied to the metal cover 180 from the outside, it is possible to soften the force, in a case of using the resin 185 having the high modulus of elasticity. Accordingly, it becomes possible to suppress breakage of the sealing plate 170 made of glass.

### (Through hole sealing part 169)

In the through hole sealing part 169, a height (protruding height) of a part protruding from the second surface 114 of the first glass substrate 110 is preferably equal to or less than 3 mm, and more preferably is equal to or less than 2 mm.

The smaller the protruding height is, the further the appearance of the vacuum insulating glass 100 improves.

The respective constituent members are described above taking the first vacuum insulating glass 100 as an example. However, it should be noted that the above descriptions can be similarly applied to the second vacuum insulating glass 200 as illustrated in FIG. 3.

### (Method of producing vacuum insulating glass according to one embodiment of the present invention)

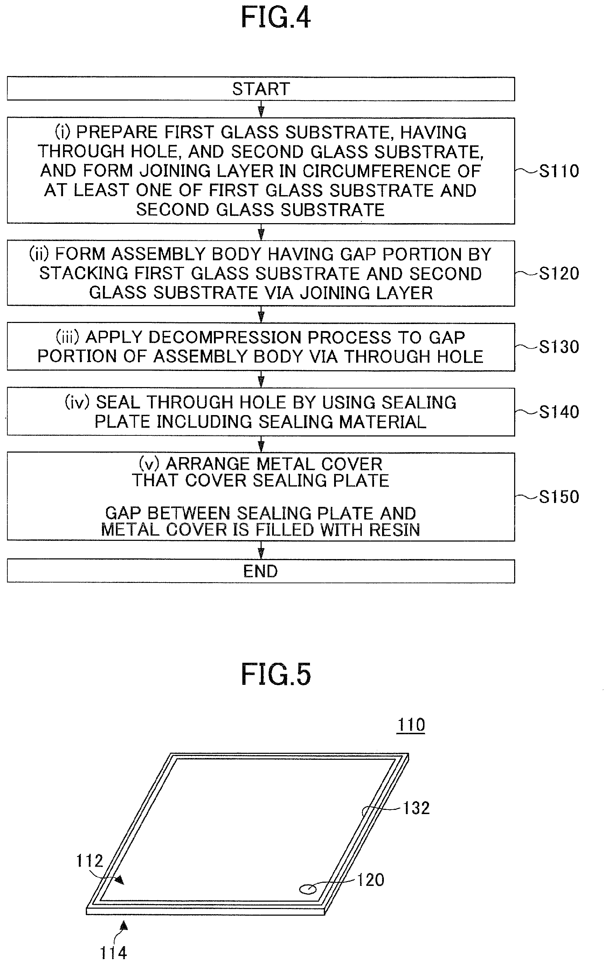

Next, a method of producing vacuum insulating glass according to one embodiment of the present invention will be described with reference to FIG. 4.

Fig. 4 illustrates a schematic flow of the method of the producing vacuum insulating glass according to the embodiment of the present invention.

As illustrated in Fig. 4, the method of the producing vacuum insulating glass according to the embodiment of the present invention includes
a step (i) of preparing a first glass substrate, having a through hole, and a second glass substrate and forming a joining layer in the circumference of at least one of the first glass substrate and the second glass substrate (step S110);
a step (ii) of forming an assembly body having a gap portion by stacking the first glass substrate and the second glass substrate via the joining layer (step S120);
a step (iii) of applying a decompression process to the gap portion of the assembly body via the through hole (step S130);
a step (iv) of sealing the through hole by using a sealing plate including a sealing material (step S140); and
a step (v) of arranging a metal cover that covers the sealing plate, which is a step of filling a clearance gap between the sealing plate and the metal cover with resin.

In the following, processes will be described with reference to FIG. 5 to FIG. 7. Here, taking the above described first vacuum insulating glass 100 having a configuration as illustrated in FIG. 2 as an example, the processes will be described. Accordingly, in the following descriptions, the reference numerals illustrated in FIG. 2 are used to describe the respective members.

### (Step S110)

First, the first glass substrate 110, which has the through hole 120, and the second glass substrate 140 are prepared.

The first glass substrate 110 has the first surface 112 and the second surface 114. The through hole 120 extends from a first opening in the first surface 112 to a second opening in the second surface 114. The second glass substrate 140 has the third surface 142 and the fourth surface 144.

A position at which the through hole 120 is formed in the first glass substrate 110 is not limited in particular. However, in a normal case, the through hole 120 is formed at an inconspicuous position of the first glass substrate 120. For example, the through hole 120 is formed near any of corners.

Shapes of the first opening and/or the second opening of the through hole 120 are not limited in particular. The shapes of the first opening and/or the second opening may be, for example, a circle, an ellipse, a triangle, a rectangle, or the like. Further, sizes of the first opening and/or the second opening are not limited in particular. Maximum sizes of the first opening and/or the second opening (e.g., a diameter in a case of a circle, a diagonal length in case of a rectangle) may be, for example, in a range of from 1 mm to 15 mm.

Further, the shapes and/or the maximum sizes may be different between the first opening and the second opening of the through hole.

Next, the joining layer 132 is formed on the first surface 112 of the first glass substrate 110. The joining layer 132 is formed in an annular shape outside the through hole 120.

Such a first glass substrate 110 is schematically illustrated in Fig. 5.

A configuration of the joining layer 132 in not limited in particular as long as the joining layer 132 can properly seal the gap portion 152 to be formed when stacking the first glass substrate 110 and the second glass substrate 140 afterwards.

For example, the joining layer 132 may be constituted with a glass solidified layer. Such a glass solidified layer may be formed by, for example, burning paste which contains a glass frit. A burning temperature of the glass solidified layer (further, a melting temperature and/or a softening temperature) can be adjusted by changing an amount and a composition of the glass frit contained in the paste.

It should be noted that the joining layer may be also arranged on one surface (the third surface 142) of the second glass substrate 140. Alternatively, the joining layer may be placed on only one surface (the third surface 142) of the second glass substrate 140 instead of on the first glass substrate 110.

### (Step S120)

Next, an assembly body is formed by using the first and second glass substrates 110 and 140 prepared in step S110.

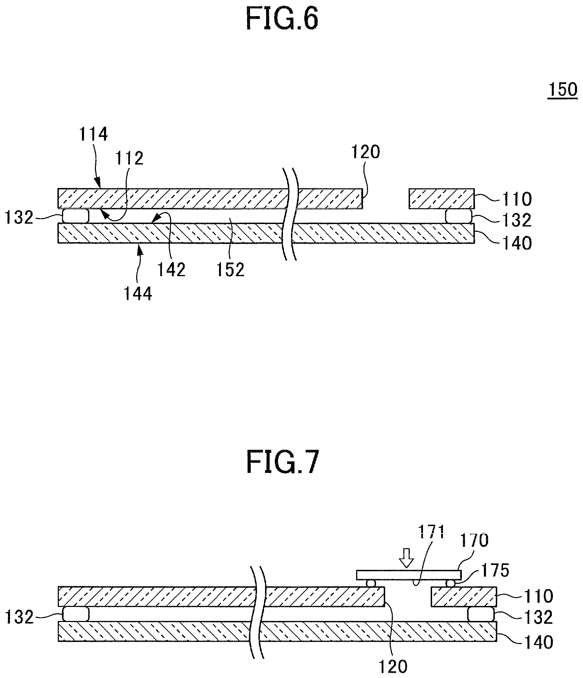

An example of a configuration of the assembly body is schematically illustrated in Fig. 6.

As illustrated in Fig. 6, the assembly body 150 is formed by arranging the first glass substrate 110 and the second glass substrate 140 facing each other via the joining layer 130. That is, the first glass substrate 110 is stacked with the second glass substrate 140 in such a way that a side of the first surface 112 is an inner side. Similarly, the second glass substrate 140 is stacked with the first glass substrate 110 in such a way that a side of the third surface 142 is an inner side and a side of the fourth surface 144 is an outer side.

Thus, the gap portion 152 is formed between the first glass substrate 110 and the second glass substrate 140.

After that, the assembly body 150 is heated to a temperature equal to or higher than the softening temperature of the joining layer 132. As a result, the first glass substrate 110 and the second glass substrate 140 are joined together via the joining layer 132.

The heating temperature may be different depending on a type of the joining layer 132, and may be, for example, in a range of from 350 °C to 520 °C.

### (Step S130)

Next, a decompression process is performed by vacuum-suctioning the gap portion 152 of the assembly body 150. A processing method of decompressing the gap portion 152 of the assembly body 150 is not limited in particular, and a conventionally used method can be applied.

### (Step S140)

Next, as illustrated in FIG. 7, the through hole 120 of the first glass substrate 110 is sealed by using the sealing plate 170.

The sealing material 175 annularly formed is placed on the first surface 171 of the sealing plate 170 in advance. Accordingly, the through hole 120 can be sealed by arranging the sealing plate 170 on the upper part of the through hole 120 such that the sealing material 175 surrounds the through hole 120.

For example, the sealing material 175 may be constituted with a material that softens when heated. For example, the sealing material 175 may be constituted with a glass solidified layer. In this case, the sealing material 175 softens by heating the sealing material 175. Accordingly, after that, the sealing plate 170 can be joined to the first glass substrate 110 by pressing the sealing plate 170 toward the first glass substrate 110.

### (Step S150)

Next, the resin 185 is placed to cover the sealing plate 170. Further, the metal cover 180 is arranged to cover the resin 185 (see the above described FIG. 2).

Alternatively, the metal cover 180 may be arranged to cover the sealing plate 170 first. After that, the clearance gap inside of the metal cover 180 is sealed by supplying the resin 185 from a supply port provided in advance on the metal cover 180.

According to the above steps, it is possible to produce the first vacuum insulating glass 100.

It should be noted that the above described producing method can also be applied to the second vacuum insulating glass 200 as illustrated in FIG. 3.

However, the above described producing method is just an example. The first vacuum insulating glass 100 and the second vacuum insulating glass 200 may be produced by another producing method.

### (Example of applying vacuum insulating glass according to one embodiment of the present invention)

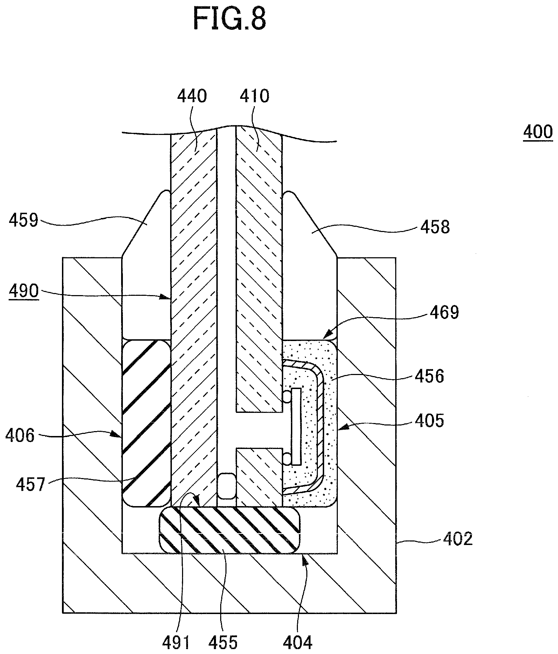

Next, an example (a window glass member for a building) of applying vacuum insulating glass according to one embodiment of the present invention will be described with reference to FIG. 8.

In FIG. 8, a part of the window glass member for the building is enlarged and illustrated schematically.

As illustrated in FIG. 8, the window glass member 400 (referred to as the "first window glass member" hereinafter) for the building includes a sash 402 and vacuum insulating glass 490 fitted into the sash 402.

Members for fixing the vacuum insulating glass 490 are placed at predetermined locations inside of the sash 402.

For example, a setting block 455 is arranged on a bottom part 404 of an inner wall of the sash 402. The setting block 455 has a function that accepts a first edge face 491 of the vacuum insulating glass 490.

Further, a first fixing material 456 is placed on a first part 405 of the inner wall of the sash 402, that is, on a side facing a first glass substrate 410 in the vicinity of the first edge face 491 of the vacuum insulating glass 490. Similarly, a second fixing material 457 is placed on a second part 406 of the inner wall of the sash 402, that is, on a side facing a second glass substrate 440 in the vicinity of the first edge face 491 of the vacuum insulating glass 490.

Furthermore, a third fixing material 458 is placed on a side, further away from the bottom part 404 than the first part 405, of the inner wall of the sash 402. Similarly, a fourth fixing material 459 is placed on a side, further away from the bottom part 404 than the second part 406, of the inner wall of the sash 402.

For example, the setting block 455 is constituted with a rubber material. For example, the first fixing material 456 is constituted with a resinous adhesive material. For example, the second fixing material 457 is constituted with a rubber material. For example, the third fixing material 497 and the fourth fixing material 459 are constituted with a sealant material such as silicone.

Here, in the first window glass member 400, the vacuum insulating glass 490 is constituted with the first vacuum insulating glass 100 or the second vacuum insulating glass 200 that has the characteristics as described above. In this case, as described above, it is possible to significantly suppress the protrusion of a through hole sealing part 469 in comparison with a conventional one. Further, the through hole sealing part 469 has a certain degree of resistance to a force from a direction parallel to a thickness direction of the vacuum insulating glass 490.

Therefore, according to the window glass member 400, the through hole sealing part 469 of the vacuum insulating glass 490 can be inserted into the sash 402. Thereby, the through hole sealing part 469 of the vacuum insulating glass 490 can be hidden by the sash 402. As a result, according to the window glass member 400, it is possible to avoid a conventional designing problem.

Further, according to the window glass member 400, it is possible to significantly reduce a thickness (size in a horizontal direction in FIG. 8) of the sash 402. In other words, it is possible to arrange the vacuum insulating glass 490 inside the sash 402 that has a small thickness.

### (Another example of applying vacuum insulating glass according to one embodiment of the present invention)

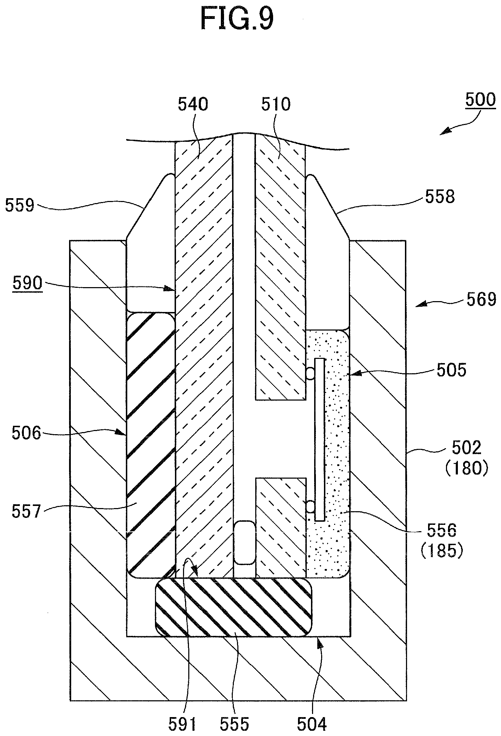

Next, another example (a window glass member for a building) of applying vacuum insulating glass according to one embodiment of the present invention will be described with reference to FIG. 9.

In FIG. 9, a part of the window glass member for the building is enlarged and illustrated schematically.

As illustrated in FIG. 9, the window glass member 500 (referred to as the "second window glass member" hereinafter) for the building includes a sash 502 and vacuum insulating glass 590 fitted into the sash 502.

Similar to the sash 402 of the first window glass member 400 illustrated in FIG. 8, members for fixing the vacuum insulating glass 590 are placed at predetermined locations inside of the sash 502.

For example, a setting block 555 is arranged on a bottom part 504 of an inner wall of the sash 502. The setting block 555 has a function that accepts a first edge face 591 of the vacuum insulating glass 590.

Further, a first fixing material 556 is placed on a first part 505 of the inner wall of the sash 502, that is, on a side facing a first glass substrate 510 in the vicinity of the first edge face 591 of the vacuum insulating glass 590. Similarly, a second fixing material 557 is placed on a second part 506 of the inner wall of the sash 502, that is, on a side facing a second glass substrate 540 in the vicinity of the first edge face 591 of the vacuum insulating glass 590.

Furthermore, a third fixing material 558 is placed on a side, further away from the bottom part 504 than the first part 505, of the inner wall of the sash 502. Similarly, a fourth fixing material 559 is placed on a side, further away from the bottom part 504 than the second part 506, of the inner wall of the sash 502.

The setting block 555, the second fixing material 557, the third fixing material 558, and the fourth fixing material 559 are constituted with members similar to those of the above described setting block 455, the second fixing material 457, the third fixing material 458, and the fourth fixing material 459 illustrated in FIG. 8, respectively. On the other hand, the first fixing material 556 is constituted with resin.

Here, in the second window glass member 500, the vacuum insulating glass 590 has a configuration similar to that of the first vacuum insulating glass 100 having the characteristics as described above.

However, in a case of the second window glass member 500, a configuration of the through hole sealing part 569 of the vacuum insulating glass 590 is different from the through hole sealing part 169 in the first vacuum insulating glass 100 illustrated in FIG. 2.

That is, in the vacuum insulating glass 590 illustrated in FIG. 9, the metal cover 180 and the resin 185 in the first vacuum insulating glass 100 illustrated in FIG. 2 are not present. More precisely, in the vacuum insulating glass 590 illustrated in FIG. 9, the sash 502 itself corresponds to the metal cover 180 in the first vacuum insulating glass 100 illustrated in FIG. 2, and the first fixing material 556 itself corresponds to the resin 185 in the first vacuum insulating glass 100.

It is apparent for those skilled in the art that effects similar to those of the above described first window glass member 400 can also be obtained according to the second window glass member 500 having such a configuration.

The example of applying the vacuum insulating glass according to the present invention is described above with reference to FIG. 8 and FIG. 9. However, it is apparent for those skilled in the art that application aspects of the vacuum insulating glass according to the present invention are not limited to such examples.

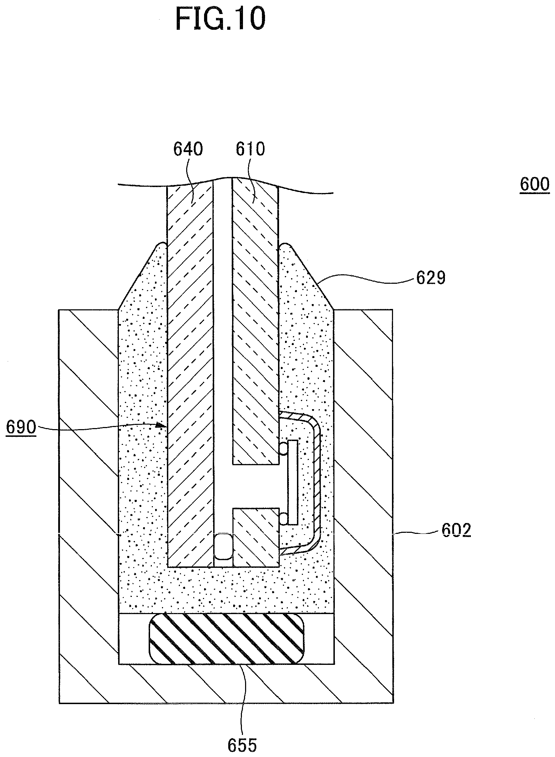

For example, as a variation example of the first window glass member 400 illustrated in FIG. 8, a window glass member 600 (referred to as the "third window glass member" 600 hereinafter) as illustrated in FIG. 10 can be considered.

Here, the third window glass member 600 is different from the first window glass member 400 in that a single resinous fixing member 629 is provided instead of the fixing members 456, 457, 458, and 459 in the first window glass member 400.

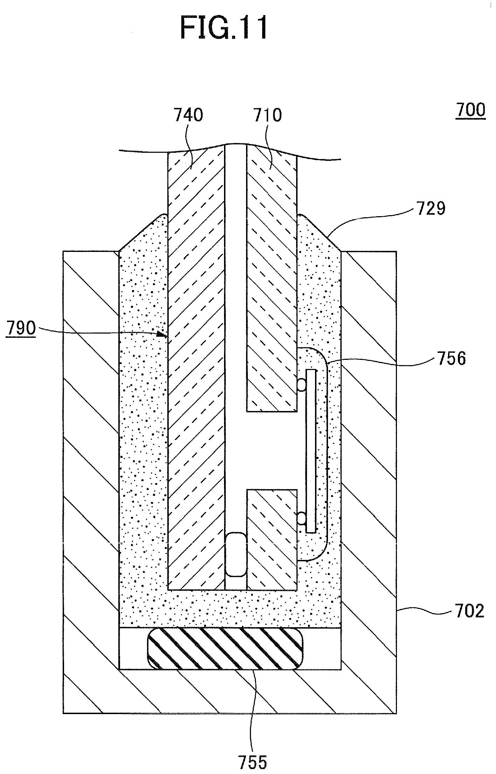

Similarly, as a variation example of the second window glass member 500 illustrated in FIG. 9, a window glass member 700 (referred to as the "fourth window glass member" 700 hereinafter) as illustrated in FIG. 11 can be considered.

Here, the fourth window glass member 700 is different from the second window glass member 500 in that a resinous fixing member 729 is provided instead of the fixing members 557, 558, and 559 except for the first fixing member 556 in the second window glass member 500. Here, in the fourth window glass member 700, a fixing member 756 is a member corresponding to the first fixing member 556 of the second window glass member 500.

As described above, it is apparent for those skilled in the art that various application aspects can be considered as the aspects of the vacuum insulating glass according to the present invention.

### INDUSTRIAL APPLICABILITY

The present invention may be used for vacuum insulated glass and the like used for window glass of constructions.

### DESCRIPTION OF THE REFERENCE NUMERALS

100 first vacuum insulating glass
110, 210, 410, 510 first glass substrate
112, 212 first surface
114, 214 second surface
120, 220 through hole
130, 230 sealing member
132, 232 joining layer
140, 240, 440, 540 second glass substrate
142, 242 third surface
144, 244 fourth surface
150 assembly body
152, 252 gap portion
159, 269 through hole sealing part
170, 270 sealing plate
171, 271 first surface of the sealing plate
175, 275 sealing material
180, 280 metal cover
185, 285 resin
200 second vacuum insulating glass
221 first part
222 second part
400 first window glass member
402, 502 sash
404, 504 bottom part of the inner wall
405, 505 first part of the inner wall
406, 506 second part of the inner wall
455, 555 setting block
456, 556 first fixing material
457, 557 second fixing material
458, 558 third fixing material
459, 559 first fixing material
469, 569 through hole sealing part
490, 590 vacuum insulating glass
419, 591 first edge face
500 second window glass member
600 third window glass member
602 sash
610 first glass substrate
629 resinous fixing member
640 second glass substrate
655 setting block
690 vacuum insulating glass
700 fourth window glass member
702 sash
710 first glass substrate
729 resinous fixing member
740 second glass substrate
755 setting block
756 fixing member
790 vacuum insulating glass

## Claims

1. Vacuum insulating glass having a gap portion between first and second glass substrates,
wherein the first glass substrate has a first surface, which is closer to the gap portion, a second surface at an opposite side of the first surface, and a through hole that penetrates from the first surface to the second surface, the through hole being sealed by a sealing plate comprising metal, ceramic or glass joined to the first glass substrate via a sealing material comprising brazing filler metal, solder or glass frit,
wherein the sealing plate is covered with a metal cover, and
wherein a clearance gap between the metal cover and the sealing plate is filled with resin.

2. The vacuum insulating glass according to claim 1, wherein the sealing plate is glass.

3. The vacuum insulating glass according to claim 1, wherein the sealing plate is metal.

4. The vacuum insulating glass according to any one of claims 1 to 3, wherein the resin is an adhesive material.

5. The vacuum insulating glass according to any one of claims 1 to 4,
wherein the vacuum insulating glass is fitted into a sash for a window frame, and
wherein the metal cover is hidden by the sash.

6. The vacuum insulating glass according to any one of claims 1 to 4, wherein the metal cover is constituted with a sash for a window frame, and the vacuum insulating glass is joined, by the resin, to the sash.

## Patentansprüche

1. Vakuumisolierglas mit einem Spaltabschnitt zwischen einem ersten und einem zweiten Glassubstrat,
wobei das erste Glassubstrat eine erste Oberfläche, die sich näher am Spaltabschnitt befindet, eine zweite Oberfläche an einer gegenüberliegenden Seite der ersten Oberfläche und ein Durchgangsloch, das von der ersten Oberfläche zu der zweiten Oberfläche durchdringt, aufweist, wobei das Durchgangsloch durch eine Dichtungsplatte, umfassend Metall, Keramik oder Glas, abgedichtet ist, die mit dem ersten Glassubstrat über ein Dichtungsmaterial, umfassend Hartlötfüllmetall, Lötmittel oder Glasfritte, verbunden ist,
wobei die Dichtungsplatte mit einer Metallabdeckung abgedeckt ist, und
wobei ein Durchschlupf zwischen der Metallabdeckung und der Dichtungsplatte mit Harz gefüllt ist.

2. Vakuumisolierglas nach Anspruch 1, wobei die Dichtungsplatte Glas ist.

3. Vakuumisolierglas nach Anspruch 1, wobei die Dichtungsplatte Metall ist.

4. Vakuumisolierglas nach einem der Ansprüche 1 bis 3, wobei das Harz ein Haftmittelmaterial ist.

5. Vakuumisolierglas nach einem der Ansprüche 1 bis 4,
wobei das Vakuumisolierglas in einen Flügel für einen Fensterrahmen eingepasst ist, und
wobei die Metallabdeckung durch den Flügel verborgen ist.

6. Vakuumisolierglas nach einem der Ansprüche 1 bis 4, wobei die Metallabdeckung durch einen Flügel für einen Fensterrahmen gebildet ist, und das Vakuumisolierglas durch das Harz mit dem Flügel verbunden ist.

## Revendications

1. Verre isolant à vide ayant une partie d'espace entre des premier et second substrats en verre,
dans lequel le premier substrat en verre présente une première surface, qui est plus proche de la partie d'espace, une seconde surface sur un côté opposé de la première surface, et un trou traversant qui pénètre à partir de la première surface vers la seconde surface, le trou traversant étant scellé par une plaque d'étanchéité comprenant un métal, une céramique ou un verre liée au premier substrat en verre via un matériau d'étanchéité comprenant un métal d'apport pour brasage, une brasure ou une fritte de verre,
dans lequel la plaque d'étanchéité est recouverte d'une couverture métallique, et
dans lequel un espace libre entre la couverture métallique et la plaque d'étanchéité est rempli avec une résine.

2. Verre isolant à vide selon la revendication 1, dans lequel la plaque d'étanchéité est en verre.

3. Verre isolant à vide selon la revendication 1, dans lequel la plaque d'étanchéité est en métal.

4. Verre isolant à vide selon l'une quelconque des revendications 1 à 3, dans lequel la résine est un matériau adhésif.

5. Verre isolant à vide selon l'une quelconque des revendications 1 à 4,
dans lequel le verre isolant à vide est monté dans un châssis pour un encadrement de fenêtre, et
dans lequel la couverture métallique est cachée par le châssis.

6. Verre isolant à vide selon l'une quelconque des revendications 1 à 4, dans lequel la couverture métallique est constituée d'un châssis pour un encadrement de fenêtre, et le verre isolant à vide est lié, par la résine, au châssis.
